Europäisches Patentamt

European Patent Office

Office européen des brevets

(11) Publication number: **0 063 335**
**B1**

(12) **EUROPEAN PATENT SPECIFICATION**

(45) Date of publication of patent specification: **31.07.85**

(21) Application number: **82103068.1**

(22) Date of filing: **09.04.82**

(51) Int. Cl.⁴: **F 16 K 31/06, F 16 K 11/24**

㊹ **Valve.**

(30) Priority: **10.04.81 ES 257582 u**

(43) Date of publication of application:
**27.10.82 Bulletin 82/43**

(45) Publication of the grant of the patent:
**31.07.85 Bulletin 85/31**

(84) Designated Contracting States:
**DE FR GB IT SE**

(56) References cited:
**DE-U-8 028 467**
**GB-A-1 410 753**
**US-A-3 062 992**
**US-A-3 593 956**
**US-A-3 630 482**

(73) Proprietor: **EATON S.A.M.**
**14 Boulevard du Bord de Mer Boite Postale 84**
**Monaco (MC)**

(72) Inventor: **Buffet, Jean-Claude**
**31, Avenue Paul Doumer**
**F-06240 Beausoleil (FR)**

(74) Representative: **Wagner, Karl H.**
**WAGNER & GEYER Patentanwälte**
**Gewuerzmuehlstrasse 5 Postfach 246**
**D-8000 München 22 (DE)**

Courier Press, Leamington Spa, England.

EP 0 063 335 B1

## Description

The present invention refers to a movable assisted-armature pilot control valve, and has as object the reduction of the electrical power necessary for the operation thereof.

More specifically, the invention relates to a valve actuated by magnetic control means and comprising:

a displaceable partition separating an upstream space from a pilot chamber except for a restricted bleed fluid passage;

the partition also separating a downstream space from the pilot space except for a less restricted pilot passage;

the pilot passage, only when unobstructed by a movable closure piece, causing differential fluid pressure to displace the partition so as to open the valve to direct flow between the upstream and downstream spaces;

a first spring supported on a base to bias the movable closure piece to obstruct the pilot passage and hence to restore the partition to its valve-closing position; and

magnetic control means, arranged when actuated to move the closure piece against said first spring, to initiate an opening of the pilot passage.

Such valves are known from German DE—U—8028467, whereby pilot control valves are provided with a movable armature, the function of which is to allow, when the coil receives current, opening of a central hole which joins the fluid inlet and outlet manifolds existing in the valve.

The mentioned central hole of said valves which is opened and closed by the armature, is provided by means of an insert joined to a diaphragm which forms, with the valve body, a pilot chamber which helps the opening of said valve.

More specifically in this reference, as embodied, the insert has a small axial hole which, in a closed condition, is obstructed by the movable armature itself of the valve, whereby the pressure in the pilot chamber is the same as that in the sector of the valve body joined to the fluid inlet pipe and the insert rests firmly on the outlet centre hole. When the armature is axially moved from this rest position, the fluid contained in the pilot chamber flows to the outlet manifold, said chamber thus loses its pressure and, consequently, the insert is moved towards the open position of the valve due to the pressure of the fluid existing in the inlet manifold. More specifically, the resultant flow of fluid is to empty the pilot chamber, since the flow output from the axial hole of the insert exceeds the flow input which reaches said chamber through a lateral bleed hole provided in the diaphragm.

When the supply of electricity is cut off from the coil, the armature returns to its rest position, closing the centre hole of the insert and, since the fluid no longer flows out of the pilot chamber, the pressure in the interior thereof increases progressively and the insert rests again on the valve seat stopping the flow of water.

Thus, to obtain a correct function of the arrangement of DE—U—8028467 it is necessary (during the open condition) for the armature not to obstruct the hole of the insert when the valve is open and the diaphragm is in the displaced or high position. Therefore the displacement of this armature must be greater than the maximum displacement of the diaphragm (until closure is commanded).

An object of the invention is, in a movable assisted-armature pilot control valve, to avoid requirement for such a large displacement of the movable armature when the valve is opened, and thus to enable a lower power in the electromagnetic coil, with a consequent economy in components and in energy consumption.

According to the present invention, the above type of valve is characterized in that

the base of the first spring is movable against a second spring;

said second spring is sufficiently stronger than said first spring whereby the magnetic control means itself cannot move the base against said second spring;

the partition has a rigid connection to the base of the first spring;

when the partition is moved by the differential fluid pressure, said rigid connection does move the base of the first spring against the second spring.

such movement of the base thereby further removing the closure piece from the partition and thus tending to prevent any re-closure of the pilot passage by displacement of the partition.

Thus the result can be seen, that, after actuation of the magnetic control means to displace the closure means against the first spring by an initial opening amount, the resulting movement of the partition by differential fluid pressure displaces the closure piece by a much greater amount against the second spring, so that consumption of energy by the magnetic control means is minimal.

Thus, in embodiments, a double armature is provided, so that there is a first armature portion which can be displaced by the electromagnetic coil against the pressure of a small spring, which spring joins it to the second armature portion. This latter may have a tubular projection enclosing the first armature portion and the projection may rest on the insert. This second armature portion is displaceable, against a second spring not by the action of the electromagnetic coil, but by a push of the insert itself when the pressure in the pilot chamber is overcome by the input or mains fluid pressure.

Since the energised electromagnetic coil only needs to overcome the pressure of the spring corresponding to the armature seal, it is clear that the power necessary to maintain the valve open is substantially lower than in the conventional valve of this type.

A description of an embodiment will now be made, for a better understanding of the characteristics of the invention in conjunction with the drawings, wherein, illustratively and not limiting, the following is represented:

Figure 1 illustrates a side elevation view, in diametric section, of a movable assisted-armature pilot control valve made in accordance with the present invention, which appears in an open position.

Figure 2 illustrates a representation of the valve, similar to that of Figure 1, but in which said valve appears in a closed position.

Referring to these figures, it can be seen that in the body 1 of the valve there is formed a space defining an inlet chamber A, for coupling end to an inlet pipe, and an outlet chamber B, between which there is defined, in turn, a passage C which, in a closed position of the valve, the insert or partition 2 obstructs (by resting on a fixed annular seating).

To the mentioned insert 2 there is secured a diaphragm 3 which, as can be seen in the figures, is likewise secured to the body 1 of the valve, said diaphragm, together with the guide 4 for the frame, forming a pilot chamber D which collaborates in the opening and the closing functions of the insert of partition 2, depending on the pressure therein.

The pilot chamber D communicates permanently with the liquid inlet chamber A through bleed fluid passages 5 existing in the diaphragm 3 itself, while said pilot chamber D communicates with the outlet chamber B through a pilot passage 6 in the form of an axial hole 6 existing in the insert 2 secured to the diaphragm 3.

On the guide body 4 there is installed the electromagnetic coil 7 with its corresponding connection terminals 8, while in its interior there is housed the armature 9 which can be displaced axially against to the pressure of a first, small spring 10 by the excitation effect of the coil 7, being capable of closing or not the axial hole 6 of the insert or partition 2.

The armature 9 is displaceable in the interior of a tubular element 11 which, in turn, is secured to a second armature 12 mounted coaxially and outside the armature 9 in the sense of being more remote from the diaphragm and pilot passage. The second armature 12 provides a base on which the first spring 10 for the first armature rests, while the second armature 12 in turn rests on the closed bottom of the guide 4 through a second compression, coil spring 13 considerably stronger than the former.

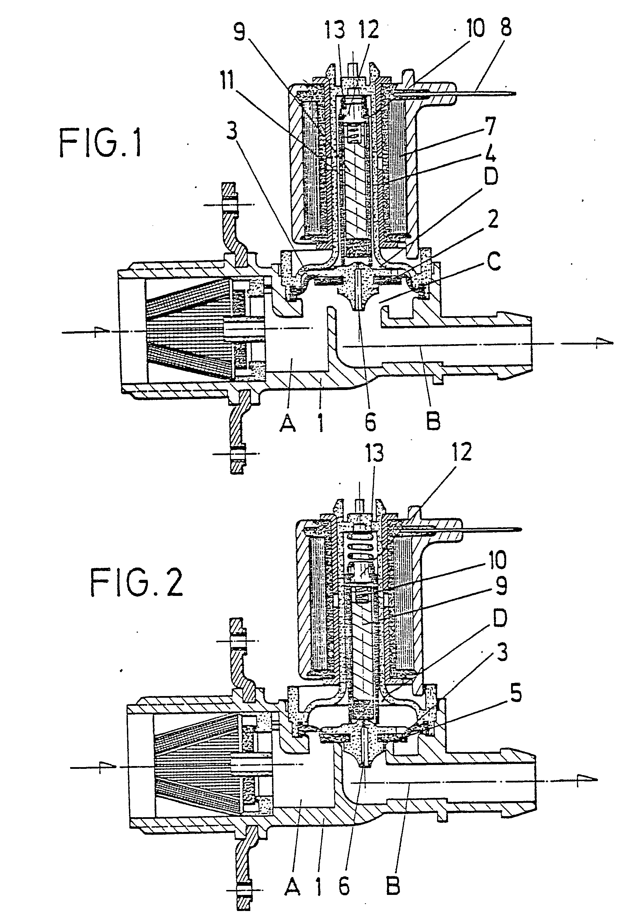

Under these conditions, departing from the closed position represented in Figure 2, when the electromagnetic coil 7 is energized with a suitable electric current, it causes the displacement of the armature 9 against the pressure of the spring 10, whereby the axial hole 6 existing in the insert 2 is opened, establishing a communication between the pilot chamber D and outlet chamber B. Under these conditions, the fluid contained in the pilot chamber D flows towards the outlet chamber B through said hole, this flow output being greater than the flow input to said pilot chamber through the bleed passage 5 in the diaphragm 3. The pressure in the pilot chamber D therefore drops, the pressure existing in the chamber A being slightly greater. Thus, the diaphragm is pushed upwards as illustrated, causing the displacement of the insert 2 with the consequent raising of the tubular element 11, which pushes the second armature 12 upward against the pressure of the second spring 13 until the C passage to the outlet chamber B is completely open.

It can readily be deduced from the aforegoing that the electromagnetic coil 7 is required only to supply the necessary power to effect the initial and short movement of the armature 9 against the small spring 10, while the majority of the opening movement and the force against the pressure of the second, stronger spring 13, takes place at the expense of the pressure of the fluid, e.g. mains pressure, existing in the manifold to be closed, wherefore the consumption of electrical energy is minimal and the dimensions of the electromagnetic coil can be reduced.

## Claims

1. A valve actuated by magnetic control means and comprising:

a displaceable partition (2) separating an upstream space (A) from a pilot chamber (D) except for a restricted bleed fluid passage (5);

the partition (2) also separating a downstream space (B) from the pilot space (D) except for a less restricted pilot passage (6);

the pilot passage, only when unobstructed by a movable closure piece (9), causing differential fluid pressure to displace the partition so as to open the valve to direct flow between the upstream (A) and downstream (B) spaces;

a first spring (10) supported on a base (12) to bias the movable closure piece (9) to obstruct the pilot passage and hence to restore the partition to its valve-closing position; and

magnetic control means (7), arranged when actuated to move the closure piece (9) against said first spring (10), to initiate an opening of the pilot passage (6), characterized in that

the base (12) of the first spring is movable against a second spring (13);

said second spring (13) is sufficiently stronger than said first spring (10) whereby the magnetic control means itself cannot move the base against the second spring;

the partition (2) has a rigid connection (11) to the base (12) of the first spring;

when the partition (2) is moved by the differential fluid pressure, said rigid connection (11) does move the base (12) of the first spring against the second spring (13);

such movement of the base thereby further removing the closure piece (9) from the partition (2) and thus tending to prevent any re-closure of the pilot passage (6) by displacement of the partition.

2. A magnetically-controlled valve according to claim 1 characterized in that the rigid connection is a rigid tube (11) which surrounds the first spring (10) and the closure piece (9) while allowing displacements of the latter.

3. A magnetically-controlled valve according to claim 2 characterized in that the closure piece includes a first armature portion (9) and the base is provided by a second armature portion (12).

**Patentansprüche**

1. Ein durch magnetische Steuermittel betätigtes Ventil, welches folgendes aufweist:

eine versetzbare Unterteilung (2), die einen stromaufwärts gelegenen Raum (A) von einer Steuerkammer (D) mit Ausnahme eines eingeschränkten Ablaßströmungsmitteldurchlasses (5) trennt,

wobei die Unterteilung (2) auch einen stromabwärts gelegenen Raum (B) vom Steuerraum (D) trennt, und zwar mit der Ausnahme eines weniger eingeschränkten Steuerdurchlasses (6),

wobei der Steuerdurchlaß — nur dann, wenn er durch ein bewegliches Verschlußstück (9) nicht abgedeckt ist — dadurch Differenzströmungsmitteldruck die Unterteilung zur Versetzung veranlaßt, um so das Ventil zu öffnen und Strömung zwischen den Stromaufwärts-(A) und Stromabwärts-(B) Räumen zuleiten,

eine erste auf einer Basis (12) getragene Feder (10) zum Vorspannen des beweglichen Verschlußstücks (9), um den Steuerdurchlaß zu sperren und damit die Unterteilung in ihre Ventilschließposition zurückzubringen, und

magnetische Steuermittel (7), die derart angeordnet sind, daß sie bei Betätigung das Verschlußstück (9) entgegen der ersten Feder (10) bewegen, um ein Öffnen des Steuerdurchlasses (6) einzuleiten, dadurch gekennzeichnet, daß

die Basis (12) der ersten Feder entgegen einer zweiten Feder (13) bewegbar ist,

daß die zweite Feder (13) hinreichend stärker ist als die erste Feder (10), wodurch die magnetischen Steuermittel selbst, die Basis nicht entgegen der zweiten Feder bewegen können,

daß die Unterteilung (2) eine starre Verbindung (11) zur Basis (12) der ersten Feder aufweist,

wobei dann, wenn die Unterteilung (2) durch den Differenzströmungsmitteldruck bewegt wird, die starre Verbindung (11) die Basis (12) der ersten Feder gegen die zweite Feder (13) bewegt, wobei eine solcher Bewegung der Basis dadurch das Verschlußstück (9) von der Unterteilung (2) weiter wegbewegt und somit die Tendenz hat, das Wiederschließen des Steuerdurchlasses (6) durch die Versetzung der Unterteilung zu verhindern.

2. Magnetisch gesteuertes Ventil nach Anspruch 1, dadurch gekennzeichnet, daß die starre Verbindung ein starres Rohr (11) ist, welches die erste Feder (10) und das Verschlußstück (9) umgibt, wobei Versetzungen des letzteren zugelassen sind.

3. Magnetisch gesteuertes Ventil nach Anspruch 2, dadurch gekennzeichnet, daß das Verschlußstück einen ersten Ankerteil (9) aufweist und daß die Basis durch einen zweiten Ankerteil (12) vorgesehen wird.

**Revendications**

1. Une soupape actionnée par un dispositif de commande magnétique et comprenant:

— une paroi séparatrice déplaçable (2) et séparant un espace d'amont (A) d'une chambre pilote (D) excepté pour un passage étranglé (5) de fluide déchargé;

— la paroi séparatrice (2) séparant également un espace d'aval (B) de l'espace pilote (D), excepté un passage pilote (6) moins étranglé;

— le passage pilote, seulement lorsqu'il n'est pas obstrué par un élément de fermeture mobile (9) produisant une pression fluidique différentielle assurant un déplacement de la paroi séparatrice pour ouvrir la soupape afin de diriger un écoulement entre les espaces d'amont (A) et d'aval (B);

— un premier ressort (10) supporté par une base (12) pour pousser l'élément mobile de fermeture (9) de manière à obturer le passage pilote et par conséquent à ramener la paroi séparatrice dans sa position de fermeture de soupape; et

— un dispositif de commande magnétique (7), agencé lorsqu'il est actionné pour déplacer l'élément de fermeture (9) en opposition au premier ressort (10), afin d'amorcer une ouverture du passage pilote (6), caractérisée en ce que

— la base (12) du premier ressort est déplaçable en opposition à un second ressort;

— ledit second ressort (13) est suffisamment plus puissant que le premier ressort (10) pour que le dispositif de commande magnétique proprement dit ne puisse pas déplacer la base en opposition au second ressort;

— la paroi séparatrice (2) est reliée rigidement à la base (12) du premier ressort;

— lorsque la paroi séparatrice (2) est déplacée par la pression fluidique différentielle, ladite liaison rigide (11) ne déplace pas la base (12) du premier ressort en opposition au second ressort (13);

— ledit mouvement de la base écarte en outre l'élément de fermeture, (9) de la paroi séparatrice (2) et a par conséquent tendance à empêcher une refermeture du passage pilote (6) par déplacement de la paroi séparatrice.

2. Une soupape commandée magnétiquement selon la revendication 1, caractérisée en ce que la liaison rigide est un tube rigide (11) qui entoure le premier ressort (10) et l'élément de fermeture (9) tout en permettant des déplacements de ce dernier.

3. Une soupape commande magnétiquement selon la revendication 2, caractérisée en ce que l'élément de fermeture comprend une première partie d'armature (9) et la base est formée par une seconde partie d'armature (12).

0 063 335

FIG.1

FIG.2

1